# EUROPEAN PATENT APPLICATION

(11) **EP 2 101 367 A1**
(43) Date of publication of application: **16.09.2009**
(21) Application number: 09153870.2
(22) Date of filing: 27.02.2009
(51) Int. Cl.: H01M 2/02, H01M 6/08

(54) **Method for producing alkaline battery, and alkaline battery**

(30) Priority: 29.02.2008 JP 2008051123
(71) Applicant: Seiko Instruments Inc., Chiba-shi, Chiba (JP)
(72) Inventor: Yamaguchi, Norishige, Mihama-ku, Chiba-shi, Chiba (JP)
(74) Representative: Cloughley, Peter Andrew

(57) **Abstract**

The invention provides an alkaline battery that does not allow generation of hydrogen gas. An alkaline battery comprises a positive electrode mixture, a negative electrode mixture containing zinc alloy powder, a separator that separates the positive electrode mixture from the negative electrode mixture, an alkaline electrolyte, a positive electrode can that accommodates the positive electrode mixture, and a negative electrode can that accommodates the negative electrode mixture and has a tin coating layer formed after chemical polishing with a mixed acid and surface treatment with a conductive polymer. The opening edge of the negative electrode can has a folded portion formed along the outer peripheral surface thereof to have a U-shaped cross section, and a gasket has a protruding portion formed on the central side and having a J-shaped cross section. The space formed between the inner peripheral surface of the folded portion of the negative electrode can and the central-side protruding portion of the gasket is no wider than the thickness of the negative electrode can, and the length of the protruding portion is at least 1/2 the length of the folded portion.

## Description

The present invention relates to a method for producing an alkaline battery and also to an alkaline battery.

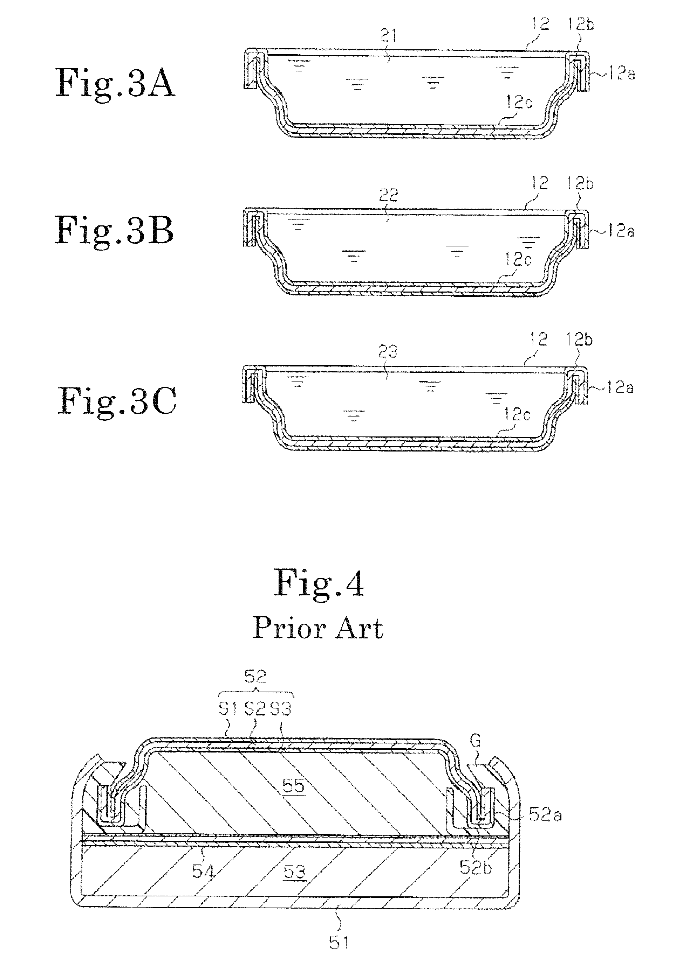

Conventionally, in a coin-shaped, button-shaped, or other-shaped flat alkaline battery for use in a small electronic device such as a wrist watch, as shown in Fig. 4, the open end of a positive electrode can 51 is sealed with a negative electrode can 52 via a gasket G. The negative electrode can 52 has, at the open edge thereof, a folded portion 52a and a folded bottom 52b formed along the outer peripheral surface to have a U-shaped cross section. The negative electrode can 52 is compressed at the folded portion 52a by the inner peripheral surface of the open edge of the positive electrode can 51 via a gasket G, and thereby maintained in a hermetically sealed state.

The negative electrode can 52 is formed from a three-layer clad material pressed into a cup-like shape, comprising a nickel layer S1 of nickel, a stainless steel layer S2 of stainless steel, and a collector layer S3 of copper.

The positive electrode can 51 accommodates a positive electrode mixture 53. The negative electrode can 52 contains a negative electrode mixture 55 separated from the positive electrode mixture 53 by a separator 54 and containing mercury-free zinc or zinc alloy powder as a negative electrode active material. An alkaline electrolyte is injected thereinto.

In the negative electrode mixture 55, amalgamated zinc comprising zinc or zinc alloy powder amalgamated with mercury is used to suppress the generation of hydrogen gas (H₂) from zinc or zinc alloy powder, and also suppress the generation of hydrogen gas (H₂) from the collector layer S3 due to contact between zinc or zinc alloy powder and copper of the collector layer S3 of the negative electrode can 52 via the alkaline electrolyte.

The reaction to generate hydrogen gas is caused by the dissolution of zinc or zinc alloy powder in an alkaline electrolyte, whereby zinc is oxidized to zinc oxide. However, as mentioned above, use of amalgamated zinc that has been amalgamated with mercury can suppress the generation of hydrogen. This provides advantages such as the prevention of reduction in capacity retention that accompanies hydrogen generation, reduction in leak resistance due to an increase in internal pressure, and expansion of the battery.

However, in recent years, from an environmental perspective, there is a tendency to avoid use of mercury in coin-shaped or button-shaped flat alkaline batteries, and a number of researches have been conducted on the avoidance of the use of mercury.

In order to effectively suppress the generation of hydrogen gas, a method has been proposed, which plates the surface of the collector layer S3 with a coating layer of tin, a metal having a higher hydrogen overpotential than copper used in the collector layer S3. A coating layer (tin plating layer) is formed by depositing the above-mentioned tin by electroless plating, electrolytic plating, etc.

Further, another method has also been proposed, according to which tin is deposited all over the copper surface of the negative electrode can by plating, and then thermally treated at 120°C to 180°C for 2 minutes or more to give a copper-tin diffusion alloy layer occupying 30% or more of the thickness of the tin plating.

Such an alkaline battery is incapable of completely preventing the generation of hydrogen gas.

Because the coating layer (tin plating layer) provided in the negative electrode can 52 is as thin as 5 µm or less and is formed by electroless plating, etc., defects such as pinholes, cracks, and the like are easily created in the coating layer (tin plating layer). If a pinhole, a crack, or the like exists in a coating layer (tin plating layer), hydrogen is generated from such a defective portion, which causes reduction in capacity retention, reduction in leak resistance, expansion of the battery can, etc.

Further, when a clad material is used for the negative electrode can 52, rolling is employed for the manufacture, and it thus is highly possible that impurities adhere to the copper surface. Such adhesion of impurities may cause defects in the coating layer (tin plating layer), which will result in the generation of hydrogen gas mentioned above.

According to the method that thermally treats a coating layer (tin plating layer) to form a copper-tin diffusion alloy layer, although a diffusion alloy layer grows, because the temperature of the thermal treatment is 120°C to 180°C, which is lower than the melting point of tin, when a pinhole, a crack, etc., which are main causes of hydrogen gas generation, exist in the tin plating layer (coating layer), such defects in the tin plating layer (coating layer) cannot be repaired.

The invention is aimed to solve the above problems. An object of the invention is to provide a method for producing a mercury-free alkaline battery that does not allow generation of hydrogen gas, and an alkaline battery.

The method for producing an alkaline battery of the invention is a method for producing an alkaline battery comprising a positive electrode can and a negative electrode can with an opening of the negative electrode can being fitted into an opening of the positive electrode can, the positive electrode can and the negative electrode can being hermetically sealed via a gasket to create an enclosed space. The enclosed space has disposed therein a separator, a positive electrode mixture on the positive electrode can side of the separator, and a negative electrode mixture containing zinc powder or zinc alloy powder on the negative electrode can side of the separator. The enclosed space is further filled with an alkaline electrolyte. The method includes a first step of chemically polishing the surface of a collector layer of copper included in the negative electrode can with an acid, a second step of surface-treating the chemically polished surface of the collector layer of the negative electrode can with a conductive polymer so as to place monovalent copper ions, a third step of forming a coating layer of a metal or an alloy having a higher hydrogen overpotential than copper on the surface-treated collector layer of the negative electrode can, and a fourth step of caulking, with the gasket in between, the positive electrode can and the negative electrode can containing the positive electrode mixture, the negative electrode mixture, the separator, and the alkaline electrolyte, thereby effecting sealing.

According to the method for producing an alkaline battery of the invention, before a coating layer of a metal or an alloy having a higher hydrogen overpotential than copper is formed on the collector copper layer of the negative electrode can, the collector copper layer of the negative electrode can is chemically polished with an acid; as a result, foreign substances adhering to a collector layer, small cracks, and the like can be eliminated. That is, foreign substances adhering to the surface of a collector layer, cracks, and the like created upon the production of the negative electrode can by pressing, which hinder the formation of a uniform and dense coating layer, can be sufficiently eliminated. Subsequently, the collector copper layer of the negative electrode can is surface-treated with a conductive polymer; as a result, only Cu+ (monovalent copper ions) exists on the surface of the collector copper layer. In other words, the use of a conductive polymer prevents divalent copper ions, which hinder the formation of a uniform and dense coating layer of a metal or an alloy having a higher hydrogen overpotential than copper metal, from being present at random with monovalent copper ions on the surface of the collector layer of copper of the negative electrode can.

Therefore, owing to the first step and the second step, a coating layer of a metal or an alloy having a higher hydrogen overpotential than copper can be formed in a negative electrode can as a tin coating layer having a uniform and precise thickness without pinholes or cracks. As a result, the collector layer is prevented from being exposed from the coating layer and generating hydrogen gas.

In the method for producing an alkaline battery, the acid used for the chemical polishing may be a mixed aqueous solution of sulfuric acid and hydrogen peroxide.

Accordingly, before a coating layer of a metal or an alloy having a higher hydrogen overpotential than copper is formed on the collector copper layer of the negative electrode can, the collector copper layer of the negative electrode can is chemically polished with a mixed aqueous solution of sulfuric acid and hydrogen peroxide, thereby eliminating foreign substances adhering to a collector layer, small cracks, etc.

In the method for producing an alkaline battery, the conductive polymer used for the surface treatment may be a polyaniline-based conductive polymer solution.

Accordingly, the collector copper layer of the negative electrode can is surface-treated with a polyaniline-based conductive polymer solution, so that only Cu+ (monovalent copper ions) exists on the surface of the collector copper layer. In other words, the use of a conductive polymer prevents divalent copper ions, which hinder the formation of a uniform coating layer of a metal or an alloy having a higher hydrogen overpotential than copper metal, from being present at random with monovalent copper ions on the collector layer of copper of the negative electrode can.

In the method for producing an alkaline battery, the coating layer of a metal or an alloy having a higher hydrogen overpotential than copper may be a tin coating layer formed of tin or tin alloy having a thickness of 0.03 to 0.1 µm using an electroless tin plating liquid.

Accordingly, a uniform and thin tin coating layer having no defects such as pinholes, cracks can be formed within a short period of time on the chemically polished and surface-treated collector layer.

The alkaline battery of the invention comprises a positive electrode can and a negative electrode can with an opening of the negative electrode can being fitted into an opening of the positive electrode can, the positive electrode can and the negative electrode can being hermetically sealed via a gasket to create an enclosed space. The enclosed space has disposed therein a separator, a positive electrode mixture on the positive electrode can side of the separator, and a negative electrode mixture containing zinc powder or zinc alloy powder on the negative electrode can side of the separator. The enclosed space is further filled with an alkaline electrolyte. The negative electrode can has a collector layer of copper whose surface is chemically polished and surface-treated, and coated with tin or tin alloy having a thickness of 0.03 to 0.1 µm without pinholes or cracks.

According to the alkaline battery of the invention, the collector layer is prevented from being exposed from the tin coating layer and generating hydrogen gas.

Embodiments of the present invention will now be described by way of further example only and with reference to the accompanying drawings, in which:
Fig. 1 is a sectional view of an alkaline battery according to the invention.
Fig. 2 is a sectional view for explaining the structure of a negative electrode can.
Fig. 3 includes explanatory views showing the method for forming a plate coating layer formed in a negative electrode can. Fig. 3 (a) is an explanatory view for explaining chemical polishing of a collector layer, Fig. 3 (b) is an explanatory view for explaining surface treatment of a collector layer, and Fig. 3 (c) is an explanatory view for explaining electroless tin plating on a collector layer.
Fig. 4 is a sectional view of a conventional alkaline battery.
Fig. 5 is a table showing the incidence of leakage and the self-discharge of an alkaline battery according to the invention.

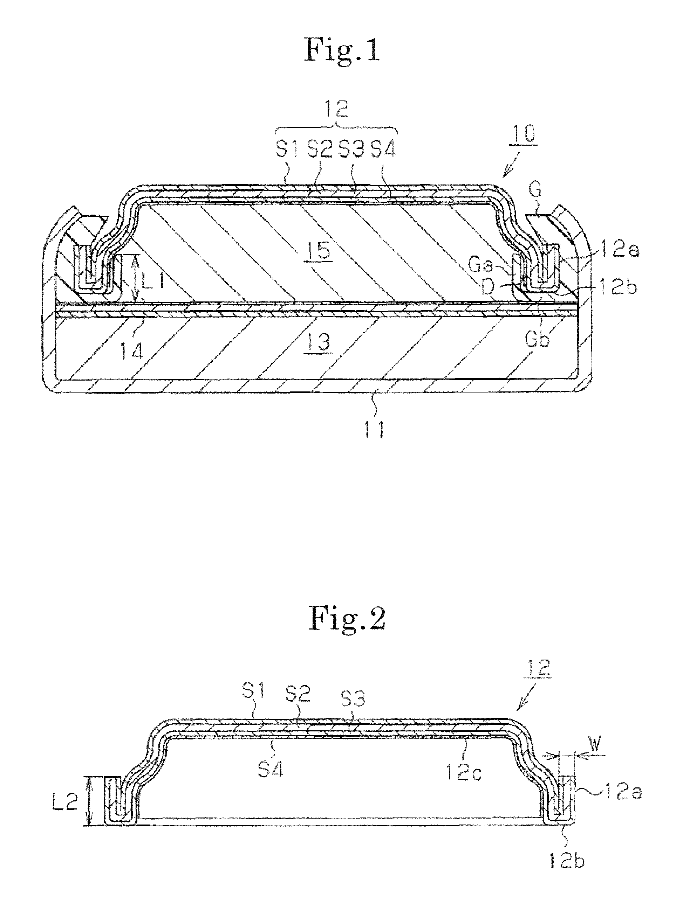

The alkaline battery of the invention is explained with reference to Fig. 1 and Fig. 2. Fig. 1 shows a sectional view of a button-shaped (flat) alkaline battery 10. The open end of a positive electrode can 11 is sealed by a negative electrode can 12 via a gasket G having a J-shaped cross section.

The positive electrode can 11 comprises a stainless steel plate plated with nickel, and serves also as a positive terminal. The positive electrode can 11 accommodates a positive electrode mixture 13 in the form of a coin- or button-shaped pellet.

On the positive electrode mixture 13 in this positive electrode can 11, a separator 14 is disposed. The separator 14 has a three-layer structure of a nonwoven fabric, cellophane, and a polyethylene graft polymerization film, for example. The separator 14 is impregnated with an alkaline electrolyte. The alkaline electrolyte may be an aqueous sodium hydroxide solution, an aqueous potassium hydroxide solution, or a mixed aqueous solution of an aqueous sodium hydroxide solution and an aqueous potassium hydroxide solution, for example.

A ring-shaped gasket G is disposed on the inner peripheral surface of the open edge of the positive electrode can 11, and a negative electrode mixture 15 is placed on the separator 14. The negative electrode mixture 15 consists of mercury-free, i. e., non-mercury-containing, zinc or zinc alloy powder, an alkaline electrolyte, a thickener, etc., and is in a gel state.

The negative electrode can 12 is inserted into the opening of the positive electrode can 11 so as to accommodate the negative electrode mixture 15. The negative electrode can 12 has, at the open edge thereof, a U-shaped folded portion 12a and a folded bottom 12b formed along the outer peripheral surface to have a U-shaped cross section. The negative electrode can 12 is compressed at the folded portion 12a by the inner peripheral surface of the open edge of the positive electrode can 11 via the gasket G, and thereby sealed (fourth step).

The negative electrode can 12 is formed from a three-layer clad material pressed into a cup-like shape, comprising a nickel layer S1 of nickel, a stainless steel layer S2 of stainless steel, and a collector layer S3 of copper, with the collector layer S3 being on the inner side. After the clad material is pressed into a cup-like shape, the negative electrode can 12 is processed as follows. The collecting inner surface 12c (surface of the collector layer S3) of the negative electrode can 12 is chemically polished with a mixed aqueous solution of sulfuric acid and oxygenated water, etc., (first step) and then surface-treated with polyaniline or a like conductive polymer material (second step). Subsequently, a tin coating layer S4 is formed in the inner surface area of the negative electrode can 12 by electroless tin plating or the like (third step).

The tin coating layer S4 is preferably formed only in the inner surface area of the negative electrode can 12 to improve leak resistance. An inner surface area refers to an area on the inner side (the side in contact with an electrolyte) of the negative electrode can 12 and inward from the folded bottom 12b. The tin coating layer S4 is not formed at the folded portion 12a and the folded bottom 12b that are in contact with the gasket G. This prevents the electrolyte from creeping up due to the creep phenomenon, and thus improves the leak resistance. More specifically, as compared with the collector layer S3, the tin coating layer S4 allows an alkaline electrolyte to creep up more easily.

A mixed aqueous solution of sulfuric acid and oxygenated water, etc., polyaniline or a like conductive polymer solution, and an electroless tin plating liquid are applied dropwise onto the necessary part, i.e., the inner surface except for the folded portion 12a and the folded bottom 12b formed along the outer peripheral surface to have a U-shaped cross section, and then removed, followed by washing and drying, repetitively. As a result, a uniform and dense tin coating layer S4 can be formed.

The thickness of the tin coating layer S4 is preferably 0.03 to 0.1 µm. This is because when the thickness is less than 0.03 µm, a uniform tin coating layer S4 cannot be formed even after chemical polishing with a mixed acid and surface treatment with a conductive polymer, thus causing defects such as pinholes, cracks, etc. A thickness of over 0.1 µm accordingly requires more time for the formation of a tin coating layer S4, but such thickening of the tin coating layer S4 provides no particular advantages.

A space D formed between the inner peripheral surface of the folded portion 12a of the negative electrode can 12 and a central-side protruding portion Ga of the gasket G is preferably no wider than the thickness W of the negative electrode can 12. The length L1 of the protruding portion Ga is preferably less than, but at least 1/2, the length L2 of the folded portion 12a.

The reasons for this are as follows. First, when the space D between the negative electrode can 12 and the gasket G is no wider than the thickness W of the negative electrode can 12, and the length L1 of the central-side protruding portion Ga of the gasket G is less than, but at least 1/2, the length L2 of the folded portion 12a of the negative electrode can 12, upon caulking and sealing the battery 10, because the space D between the negative electrode can 12 and the gasket G is narrow, and the length L1 of the central-side protruding portion Ga of the gasket G is as long as 1/2 or more the length L2 of the folded portion 12a of the negative electrode can 12, the negative electrode mixture 15 can be prevented from biting between the negative electrode can 12 and the gasket G.

Moreover, when the central-side protruding portion Ga of the gasket G is designed so that even its maximum length is shorter than the length L2 of the folded portion 12a and never makes strong contact with the inner surface (surface of the inner surface area) of the negative electrode can 12, the central-side protruding portion Ga of the gasket G does not serve as a prop for the negative electrode can 12. Accordingly, when the battery 10 is caulked and sealed, the folded bottom 12b of the negative electrode can 12 strongly presses against the bottom flat part Gb of the gasket G, thereby preventing the negative electrode mixture 15 from biting between the negative electrode can 12 and the gasket G.

Examples of positive electrode active materials usable for the positive electrode mixture 13 used in the invention include, but are not limited to, silver oxide, manganese dioxide, a nickel-silver composite oxide, and nickel oxyhydroxide.

### [Example 1]

As Example 1, an SR626SW battery having the structure shown in Fig. 1 was produced. A three-layer clad material having a thickness W of 0.2 mm and comprising a nickel layer S1, a stainless steel layer S2 of SUS304, and a collector layer S3 of copper was pressed to give a negative electrode can 12 having a folded portion 12a and a folded bottom 12b. Then, as shown in Fig. 3 (a), a mixed aqueous solution 21 of sulfuric acid and hydrogen peroxide was applied dropwise onto a collecting inner surface 12c of the collector layer S3 of the negative electrode can 12 to chemically polish only the collecting inner surface 12c area, followed by washing with water.

Subsequently, as shown in Fig. 3 (b), a polyaniline-based conductive polymer solution 22 was applied dropwise to perform surface treatment. The conductive polymer solution 22 was then collected, followed by washing with water and drying.

Subsequently, as shown in Fig. 3 (c), an electroless tin plating liquid 23 was applied dropwise. The electroless tin plating liquid 23 was then collected, followed by washing with water and drying to thereby form, in the collecting inner surface 12c area of the negative electrode can 12, a dense tin coating layer S4 having a thickness of 0.07 µm and having a large crystal structure. A negative electrode can 12 was thus obtained.

Meanwhile, an alkaline electrolyte comprising an aqueous sodium hydroxide solution and an aqueous potassium hydroxide solution was injected thereinto. Next, a disc-shaped pellet of a positive electrode mixture 13 was placed into the positive electrode can 11, so as to impregnate the positive electrode mixture 13 with the alkaline electrolyte.

On the pellet of the positive electrode mixture 13 was placed a three-layer separator 14 comprising a nonwoven fabric, cellophane, and a polyethylene graft polymerization film punched into a circular shape. An alkaline electrolyte comprising an aqueous sodium hydroxide solution and an aqueous potassium hydroxide solution was applied dropwise onto the separator 14 for impregnation.

On the separator 14 was placed a gel negative electrode mixture 15 comprising a mercury-free, aluminum-, indium-, and bismuth-containing zinc alloy powder, zinc oxide, a thickener, an aqueous sodium hydroxide solution, and an aqueous potassium hydroxide solution. A ring-shaped gasket G made of nylon formed from 66 nylon coated with an asphalt + epoxy sealant was inserted into the open edge of the positive electrode can 11 to caulk the open edge of the positive electrode can 11, thereby hermetically sealing the negative electrode can 12 over the negative electrode mixture 15. An alkaline battery was thus obtained.

In this case, the width of a space D between the inner peripheral surface of the folded portion 12a of the negative electrode can 12 and the central-side protruding portion Ga of the gasket G was set at 0.05 mm, which is 1/4 the thickness W of the negative electrode can 12, and the length L1 of the protruding portion Ga of the gasket G was set at 2/3 the length L2 of the folded portion 12a of the negative electrode can 12.

### [Example 2]

The structure in Example 2 is the same as in Example 1, except that the width of the space D between the inner peripheral surface of the folded portion 12a of the negative electrode can 12 and the central-side protruding portion Ga of the gasket G was set at 0.10 mm, and the length L1 of the protruding portion Ga was set at 2/3 the length L2 of the folded portion 12a of the negative electrode can 12.

### [Example 3]

The structure in Example 3 is the same as in Example 1, except that the width of the space D between the inner peripheral surface of the folded portion 12a of the negative electrode can 12 and the central-side protruding portion Ga of the gasket G was set at 0.05 mm, and the length L1 of the protruding portion Ga was set at 1/2 the length L2 of the folded portion 12a of the negative electrode can 12.

### [Example 4]

The structure in Example 4 is the same as in Example 1, except that the thickness of the tin coating layer S4 was set at 0.03 µm.

### [Example 5]

The structure in Example 5 is the same as in Example 1, except that the thickness of the tin coating layer S4 was set at 0.1 µm.

### [Comparative Example 1]

The structure in Comparative Example 1 is the same as in Example 1, except that the thickness of the tin coating layer S4 was set at 0.01 µm.

### [Comparative Example 2]

The structure in Comparative Example 2 is the same as in Example 1, except that the step of chemical polishing with a mixed aqueous solution of sulfuric acid and hydrogen peroxide was omitted.

### [Comparative Example 3]

The structure in Comparative Example 3 is the same as in Example 1, except that the step of chemical polishing with a mixed aqueous solution of sulfuric acid and hydrogen peroxide and the step of treatment with a polyaniline-based conductive polymer solution were omitted.

### [Comparative Example 4]

The structure in Comparative Example 4 is the same as in Example 1, except that the width of the space D between the inner peripheral surface of the folded portion 12a of the negative electrode can 12 and the central-side protruding portion Ga of the gasket G was set at 0.25 mm, and the length L1 of the protruding portion Ga was set at 2/3 the length L2 of the folded portion 12a of the negative electrode can 12.

### [Comparative Example 5]

The structure in Comparative Example 5 is the same as in Example 1, except that the width of the space D between the inner peripheral surface of the folded portion 12a of the negative electrode can 12 and the central-side protruding portion Ga of the gasket G was set at 0.05 mm, and the length L1 of the protruding portion Ga was set at 1/3 the length L2 of the folded portion 12a of the negative electrode can 12.

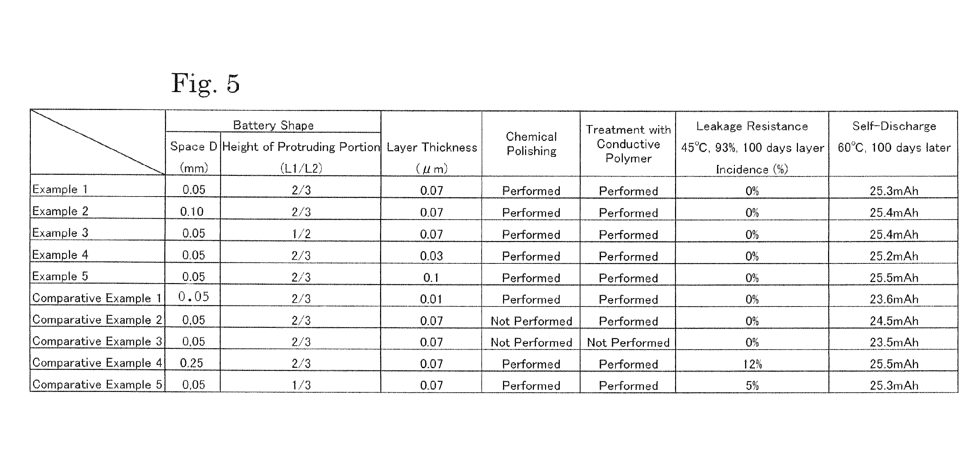

Two hundred batteries were produced for each of the above Examples 1 to 5 and Comparative Examples 1 to 5. One hundred of the batteries were stored in a severe environment where the temperature was 45°C and the relative humidity was 93%, and the incidence of leakage 100 days later was evaluated. The results of evaluation are shown in the table of Fig. 5. One hundred of the batteries were stored in an environment where the temperature was 60°C and the relative humidity was 0% for 100 days. The batteries were discharged at a constant resistance of 30 kΩ to a final voltage of 1.2 V. The thus-obtained discharge capacity [mAh] is shown in the table of Fig. 5. The initial discharge capacity of these batteries was around 28 mAh.
(1) First, Examples 4 and 5 and Comparative Example 1 are compared from the table of Fig. 5. It is found that when the thickness of the tin coating layer S4 is 0.03 to 0.1 µm, the capacity retention can be improved.
   This is because a tin coating layer S4 thickness of 0.03 µm or more leads to, as combined with the effects of chemical polishing with a mixed acid or the like and surface treatment with a conductive polymer, the formation of a uniform tin coating layer S4, thus preventing defects such as pinholes, cracks, etc. The reason that the thickness of the tin coating layer was set at no more than 0.1 µm is that although it accordingly requires more time for the formation of the tin coating layer S4, thickening of the tin coating layer S4 provides no particular advantages.
(2) Next, Example 1 and Comparative Examples 2 and 3 are compared from the table. It is found that chemical polishing with a mixed aqueous solution of sulfuric acid and hydrogen peroxide and treatment with a polyaniline-based conductive polymer solution improve the capacity retention.
   This is possibly because the chemical polishing with a mixed acid prior to the electroless tin plating and the surface treatment of the plating surface with polyaniline or a like conductive polymer material resulted in the formation of a dense tin coating layer S4 without cracks or pinholes.
(3) Next, Examples 1 and 2 and Comparative Example 4 are compared from the table. It is found that when a space D between the inner peripheral surface of the folded portion 12a of the negative electrode can 12 and the central-side protruding portion Ga of the gasket G was no wider than the thickness W of the negative electrode can 12, the leak-proof properties can be improved. This is possibly because when the battery 10 is caulked and sealed, because the space D between the negative electrode can 12 and the gasket G is narrow, the negative electrode mixture 15 can be prevented from biting between the negative electrode can 12 and the gasket G.
(4) Finally, Example 3 and Comparative Example 5 are compared from the table. It is found that when the length L1 of the central-side protruding portion Ga of the gasket G is at least 1/2 the length L2 of the folded portion 12a of the negative electrode can 12, the leak-proof properties can be improved. This is also possibly because that when the battery 10 is caulked and sealed, because the length L1 of the central-side protruding portion Ga of the gasket G is as long as 1/2 or more the length L2 of the folded portion 12a of the negative electrode can 12, the negative electrode mixture 15 can be prevented from biting between the negative electrode can 12 and the gasket G.

Moreover, when the central-side protruding portion Ga of the gasket G is designed so that even its maximum length never makes strong contact with the inner surface of the negative electrode can 12, the central-side protruding portion Ga of the gasket G does not serve as a prop for the negative electrode can 12. Therefore, when the battery 10 is caulked and sealed, the folded bottom 12b of the negative electrode can 12 strongly presses against the bottom flat part Gb of the gasket G, thereby possibly preventing the negative electrode mixture 15 from biting between the negative electrode can 12 and the gasket G.

Next, the advantages of the above-constructed embodiment are explained.
(1) According to this embodiment, first, before the coating layer S4 of tin having a higher hydrogen overpotential than copper was formed in the collector layer S3 of copper of the negative electrode can 12, the collector layer S3 of the negative electrode can 12 was chemically polished with a mixed aqueous solution 21 of sulfuric acid and hydrogen peroxide, thereby eliminating foreign substances adhering to the collector layer S3, small cracks, etc.
   Accordingly, foreign substances adhering to the surface of the collector layer S3, cracks, and the like created upon the production of the negative electrode can 12 by pressing, which hinder the formation of a uniform and dense tin coating layer S4, can be sufficiently eliminated.
(2) According to this embodiment, before the tin coating layer S4 was formed and after the collector layer S3 of the negative electrode can 12 was chemically polished, surface treatment was performed with a polyaniline-based conductive polymer so that only monovalent copper ions exist on the surface of the collector layer S3 of the negative electrode can 12.
   It accordingly is possible to prevent divalent copper ions, which hinder the formation of a uniform and dense tin coating layer S4, from being present at random with monovalent copper ions on the surface of the collector layer S3 of copper of the negative electrode can 12.
(3) According to this embodiment, the tin coating layer S4 was formed after the collector layer S3 of copper of the negative electrode can 12 was chemically polished and surface-treated. Accordingly, the tin coating layer S4 can be formed in the negative electrode can 12 from an electroless tin plating liquid 23 as a tin coating layer S4 having a uniform and precise thickness without pinholes, cracks, or like defects. As a result, the collector layer is prevented from being exposed from the coating layer and generating hydrogen gas.
   Further, because the tin coating layer S4 was formed to have a thickness of 0.03 to 0.1 µm, it is possible to form a tin coating layer S4 having a uniform and precise thickness without pinholes within a short period of time.
(4) According to this embodiment, the width of the space D between the inner peripheral surface of the folded portion 12a of the negative electrode can 12 and the central-side protruding portion Ga of the gasket G was set at no more than the thickness W of the negative electrode can 12.
   Therefore, when the battery 10 is caulked and sealed, because the space D between the negative electrode can 12 and the gasket G is narrow, the negative electrode mixture 15 can be prevented from biting between the negative electrode can 12 and the gasket G, and the leak-proof properties can be improved.
(5) According to this embodiment, the length L1 of the central-side protruding portion Ga of the gasket G was set at less than, but at least 1/2, the length L2 of the folded portion 12a of the negative electrode can 12.

Therefore, because the length L1 of the central-side protruding portion Ga of the gasket G is as long as 1/2 or more the length L2 of the folded portion 12a of the negative electrode can 12, when the battery 10 is caulked and sealed, the negative electrode mixture 15 can be prevented from biting between the negative electrode can 12 and the gasket G.

Moreover, because the central-side protruding portion Ga of the gasket G is designed so that even its maximum length is shorter than the length L2 of the folded portion 12a and never makes strong contact with the inner surface of the negative electrode can 12, the central-side protruding portion Ga of the gasket G does not serve as a prop for the negative electrode can 12. As a result, when a battery 10 is caulked and sealed, the folded bottom 12b of the negative electrode can 12 strongly presses against the bottom flat part Gb of the gasket G, thereby preventing the negative electrode mixture 15 from biting between the negative electrode can 12 and the gasket G.

The above embodiment may be modified as follows.

The coating layer of the negative electrode can 12 may be made of not only tin but also of, as a metal or alloy having a higher hydrogen overpotential than copper, one or more metals such as indium (melting point: 156.6°C) and bismuth (melting point: 271.4°C) or alloys.

This also enables the formation of a coating layer in the negative electrode can 12, which does not have defects due to pinholes, cracks, impurities, and the like. Accordingly, the generation of hydrogen gas (H₂) due to contact between zinc, which is a negative electrode active material, and the collector layer S3 of the negative electrode can 12 can be suppressed, thereby suppressing the corrosion of the zinc. At the same time, resistance to leakage due to the creep phenomenon of an alkaline electrolyte can be improved. According to the invention, an excellent alkaline battery can be obtained without using mercury.

The invention is not limited to the above examples, and naturally, various other structures are also possible without deviating from the scope of the invention.

## Claims

1. A method for producing an alkaline battery comprising:
a first step of chemically polishing a surface of a collector layer (S3) of copper included in a negative electrode can (12) with an acid (21);
a second step of surface-treating the surface of the collector layer of the negative electrode can with a conductive polymer (22) so as to place monovalent copper ions on the surface of the collector layer;
a third step of forming a coating layer (54) of a metal or an alloy having a higher hydrogen overpotential than copper on the collector layer of the negative electrode can; and
a fourth step of caulking, with a gasket (Ga) in between, a positive electrode can (11) and the negative electrode can containing a positive electrode mixture (13), a negative electrode mixture (15), a separator (14), and an alkaline electrolyte.

2. A method for producing an alkaline battery according to claim 1, wherein the acid used for the chemical polishing is a mixed aqueous solution of sulfuric acid and hydrogen peroxide.

3. A method for producing an alkaline battery according to claim 1 or claim 2, wherein the conductive polymer used for the surface treatment is a polyaniline-based conductive polymer solution.

4. A method for producing an alkaline battery according to any one of the preceding claims, wherein the coating layer of a metal or an alloy having a higher hydrogen overpotential than copper is a tin layer or tin alloy layer having a thickness of 0.03 to 0.1 µm formed by using an electroless tin plating liquid.

5. An alkaline battery (10) comprising
a negative electrode can (12) having a collector layer (S3) of copper whose surface is chemically polished and surface-treated, and coated with tin or tin alloy (S4) having a thickness of 0.03 to 0.1 µm.
